# EUROPEAN PATENT APPLICATION

(11) **EP 4 322 696 A1**
(43) Date of publication of application: **14.02.2024**
(21) Application number: 22784995.7
(22) Date of filing: 07.04.2022
(51) Int. Cl.: H04W 76/15, H04W 74/00, H04W 74/08, H04W 28/04, H04B 7/0413, H04W 84/12

(54) **METHOD AND DEVICE FOR MLSR OPERATION IN WIRELESS LAN**

(30) Priority: 08.04.2021 KR 20210046074
(71) Applicant: HYUNDAI MOTOR COMPANY, Seoul 06797 (KR); Kia Corporation, Seocho-gu Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR)
(74) Representative: Isarpatent
(86) International application number: PCT/KR2022/005052
(87) International publication number: WO 2022/216086

(57) **Abstract**

A method and a device for a MLSR operation in a wireless LAN are disclosed. An operation method of a first device comprises the steps of: performing first communication with a second device in a first link; performing a listening operation in one or more links after the end of the first communication; and starting a delay timer in a second link from among one or more links, wherein the first device does not initiate a frame transmission operation in the second link during the time corresponding to the delay timer.

## Description

### [Technical Field]

The present disclosure relates to a wireless local area network (LAN) communication technique, and more particularly, to a technique for transmission and reception based on multi-link signal radio (MLSR) operations.

### [Background Art]

Recently, as the spread of mobile devices expands, a wireless local area network technology capable of providing fast wireless communication services to mobile devices is in the spotlight. The wireless LAN technology may be a technology that supports mobile devices such as smart phones, smart pads, laptop computers, portable multimedia players, embedded devices, and the like to wirelessly access the Internet based on wireless communication technology.

The standards using wireless LAN technology are being mainly developed as the Institute of Electrical and Electronics Engineers (IEEE) 802.11 standards by the IEEE. As the above-mentioned wireless LAN technology is developed and distributed, applications utilizing wireless LAN technology have diversified, and a demand for wireless LAN technology supporting higher processing rates has arisen.

However, since a multi-link operation is an operation not defined in the existing wireless LAN standard, it may be required to define detailed operations according to an environment in which the multi-link operation is performed. In particular, methods for supporting multi-link single radio (MLSR) operation will be required.

Meanwhile, the technologies that are the background of the present disclosure are written to improve the understanding of the background of the present disclosure and may include content that is not already known to those of ordinary skill in the art to which the present disclosure belongs.

### [Disclosure]

### [Technical Problem]

The present disclosure is directed to providing a method and an apparatus for frame transmission and reception based on MLSR operations in a wireless LAN.

### [Technical Solution]

An operation method of a first device, according to a first exemplary embodiment of the present disclosure for achieving the above-described objective, may comprise: performing a first communication with a second device on a first link; performing a listening operation on one or more links after the first communication ends; and starting a delay timer on a second link among the one or more links, wherein the first device does not initiate a frame transmission operation on the second link during a time corresponding to the delay timer.

The operation method may further comprise, after starting the delay timer, receiving a first frame from the second device on the second link, wherein in response to reception of the first frame, a second communication between the first device and the second device is performed on the second link.

The performing of the first communication may comprise: switching one or more receive chains of the first device operating on the second link to the first link, wherein the switched one or more receive chains are used for reception of a plurality of spatial streams.

The operation method may further comprise, after performing the first communication, switching one receive chain among one or more receive chains used for the first communication on the first link to the second link, wherein the switched one receive chain is used to perform the listening operation on the second link.

The first frame may be an initial control frame.

The initial control frame may be a multi-user request-to-send (MU-RTS) trigger frame or an RTS frame.

The delay timer may start when the first device fails to perform a channel sensing or reception operation on the second link for a predetermined period.

The delay timer may be set in an association procedure or a multi-link (ML) capability negotiation procedure between the first device and the second device.

The listening operation may be a wireless channel sensing operation and/or a wireless signal reception operation.

The performing of the first communication may comprise: receiving a MU-RTS trigger frame from the second device; transmitting a clear-to-send (CTS) frame to the second device in response to the MU-RTS trigger frame; receiving a data frame from the second device; and transmitting a reception response frame for the data frame to the second device, wherein the data frame is received using a plurality of spatial streams, and the reception response frame is transmitted using one spatial stream or the plurality of spatial streams.

The performing of the first communication may comprise: switching receive chains operating on other link(s) of the first device to the first link, wherein the switched receive chains are used for reception of the plurality of spatial streams.

A station multi-link device (STA MLD), according to a second exemplary embodiment of the present disclosure for achieving the above-described objective, may comprise: a processor; a first STA operating on a first link based on control of the processor; a second STA operation on a second link based on control of the processor; and a memory storing one or more instructions executable by the processor, wherein the one or more instructions are executed to: cause the first STA to perform a first communication with a first access point (AP) affiliated with an AP MLD on the first link; cause the first STA and the second STA to perform listening operations after the first communication ends; and cause the second STA to start a delay timer on the second link, wherein the second STA does not initiate a frame transmission operation on the second link during a time corresponding to the delay timer.

The one or more instructions may be executed to, after the delay timer is started, receive a first frame from a second AP affiliated with the AP MLD on the second link, wherein in response to reception of the first frame, a second communication between the second STA and the second AP is performed on the second link.

The first frame may be an initial control frame.

The initial control frame may be a multi-user request-to-send (MU-RTS) trigger frame or an RTS frame.

In the performing of the first communication, the one or more instructions may be executed to switch one or more receive chains of the STA MLD operating on the second link to the first link, wherein the switched one or more receive chains are used for reception of a plurality of spatial streams.

The one or more instructions may be further executed to, after the first communication is performed, switch one receive chain among one or more receive chains used for the first communication on the first link to the second link, wherein the switched one receive chain is used to perform the listening operation on the second link.

The delay timer may start when the second STA fails to perform a channel sensing or reception operation on the second link for a predetermined period.

The delay timer may be set in an association procedure or multi-link (ML) capability negotiation procedure between the STA MLD and the AP MLD.

In the performing of the first communication, the one or more instructions may be executed to: cause the first STA to receive a MU-RTS trigger frame from the first AP; cause the first STA to transmit a clear-to-send (CTS) frame to the first AP in response to the MU-RTS trigger frame; cause the first STA to receive a data frame from the first AP; and cause the first STA to transmit a reception response frame for the data frame to the first AP, wherein the data frame is received using a plurality of spatial streams, and the reception response frame is transmitted using one spatial stream or the plurality of spatial streams.

### [Advantageous Effects]

According to the present disclosure, a multi-link single radio (MLSR) device may wait to receive frames on links corresponding to the number of antennas. When a frame is received on a first link among the links, the MLSR device may switch radio chain(s) to the first link, and quickly receive the frame using a plurality of spatial streams. Accordingly, in a wireless LAN supporting MLSR operations, frame transmission and reception operations can be quickly performed using multiple antennas on one link.

### [Description of Drawings]

FIG. 1 is a conceptual diagram illustrating a first exemplary embodiment of a wireless LAN system.
FIG. 2 is a block diagram illustrating a first exemplary embodiment of a communication node constituting a wireless LAN system.
FIG. 3 is a conceptual diagram illustrating a first exemplary embodiment of a multi-link configured between multi-link devices (MLDs).
FIG. 4 is a sequence chart illustrating an association procedure of a station in a wireless LAN system.
FIG. 5 is a timing diagram illustrating a first exemplary embodiment of an operation method of a communication node based on EDCA.
FIG. 6 is a block diagram illustrating a first exemplary embodiment of an enhanced multi-link single radio (EMLSR) device in a wireless LAN.
FIG. 7 is a timing diagram illustrating a first exemplary embodiment of a communication method in a device supporting EMLSR mode.
FIG. 8A is a timing diagram illustrating a second exemplary embodiment of a communication method in a device supporting EMLSR mode.
FIG. 8B is a timing diagram illustrating a third exemplary embodiment of a communication method in a device supporting EMLSR mode.
FIG. 9 is a timing diagram illustrating a fourth exemplary embodiment of a communication method in a device supporting EMLSR mode.
FIG. 10 is a timing diagram illustrating a first exemplary embodiment of a power saving method through selective use of the number of spatial streams.
FIG. 11A is a timing diagram illustrating a first exemplary embodiment of a method for selecting a link through transmission of a plurality of MU-RTS trigger frames.
FIG. 11B is a timing diagram illustrating a second exemplary embodiment of a method for selecting a link through transmission of a plurality of MU-RTS trigger frames.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which exemplary embodiments according to the present disclosure are applied will be described. The wireless communication system to which the exemplary embodiments according to the present disclosure are applied is not limited to the contents described below, and the exemplary embodiments according to the present disclosure can be applied to various wireless communication systems. A wireless communication system may be referred to as a `wireless communication network'.

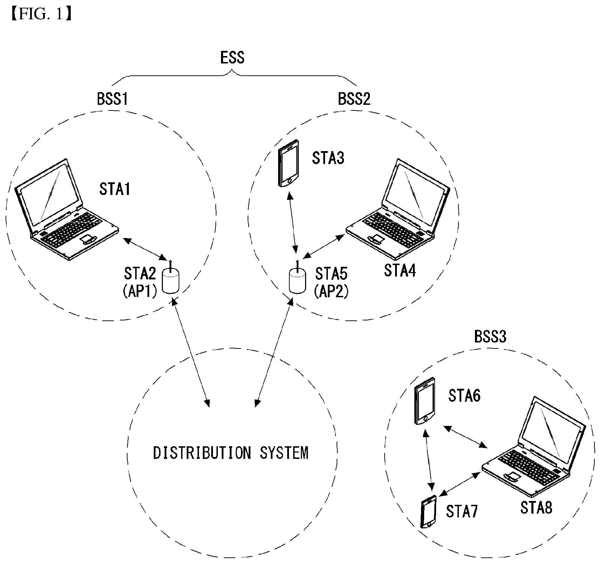

FIG. 1 is a conceptual diagram illustrating a first exemplary embodiment of a wireless LAN system.

As shown in FIG. 1, a wireless LAN system may include at least one basic service set (BSS). A BSS may refer to a set of stations (e.g., STA1, STA2 (AP1), STA3, STA4, STA5 (AP2), STA6, STA7, and STA8) that can communicate with each other through successful synchronization, and may not refer to a specific region. In exemplary embodiments below, a station performing functions as an access point may be referred to as an `access point (AP)', and a station not performing functions as an access point may be referred to as a 'non-AP station' or a 'station'.

The BSS may be classified into an infrastructure BSS and an independent BSS (IBSS). Here, a BSS1 and a BSS2 may mean infrastructure BSSs, and a BSS3 may mean an IBSS. The BSS1 may include a first station (STA1), a first access point (STA2 (AP1)) providing a distribution service, and a distribution system (DS) connecting a plurality of access points (STA2 (AP1) and STA5 (AP2)). In the BSS1, the first access point STA2 (AP1) may manage the first station STA1.

The BSS2 may include a third station (STA3), a fourth station (STA4), a second access point (STA5 (AP2)) providing a distribution service, and a DS connecting the plurality of access points (STA2 (AP1) and STA5 (AP2)). In the BSS2, the second access point STA5 (AP2) may manage the third station STA3 and the fourth station STA4.

The BSS3 may mean an IBSS operating in an ad-hoc mode. An access point, which is a centralized management entity, may not exist in the BSS3. That is, in the BSS3, the stations STA6, STA7, and STA8 may be managed in a distributed manner. In the BSS3, all stations STA6, STA7, and STA8 may refer to mobile stations, and since they are not allowed to access a DS, they may constitute a self-contained network.

The access points STA2 (AP1) and STA5 (AP2) may provide access to the DS for the stations STA1, STA3, and STA4 associated therewith via a wireless medium. In the BSS1 or BSS2, communications between the stations STA1, STA3, and STA4 are generally performed through the access points STA2 (AP1) and STA5 (AP2), but when direct links are established, direct communications between the stations STA1, STA3, and STA4 may be possible.

A plurality of infrastructure BSSs may be interconnected through a DS. The plurality of BSSs connected through the DS may be referred to as an extended service set (ESS). The communication nodes STA1, STA2 (AP1), STA3, STA4, and STA5 (AP2) included in the ESS may communicate with each other, and an arbitrary station (STA1, STA3, or STA4) may move from one BSS to another BSS within the same ESS while communicating without interruption.

The DS may be a mechanism for one access point to communicate with another access point, according to which an access point may transmit frames for stations associated with the BSS it manages, or transmit frames for an arbitrary station that has moved to another BSS. Also, the access point may transmit and receive frames to and from an external network such as a wired network. Such the DS may not necessarily have to be a network, and if it can provide a predetermined distribution service stipulated in the IEEE 802.11 standard, there is no restriction on its form. For example, the DS may be a wireless network such as a mesh network or a physical structure that connects the access points to each other. The communication nodes STA1, STA2 (AP1), STA3, STA4, STA5 (AP2), STA6, STA7, and STA8 included in the wireless LAN system may be configured as follows.

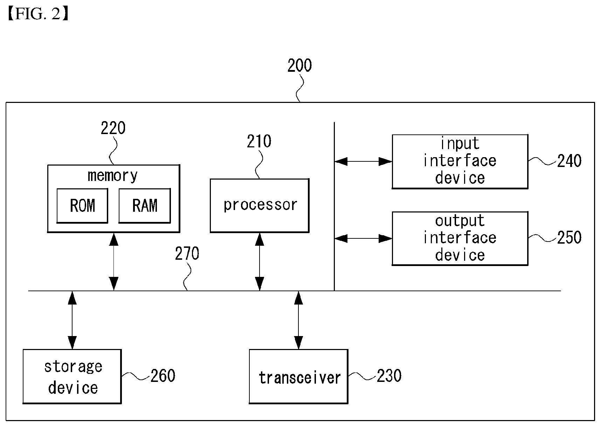

FIG. 2 is a block diagram illustrating a first exemplary embodiment of a communication node constituting a wireless LAN system.

As shown in FIG. 2, a communication node 200 may include at least one processor 210, a memory 220, and a transceiver 230 connected to a network to perform communications. The transceiver 230 may be referred to as a transceiver, a radio frequency (RF) unit, an RF module, or the like. In addition, the communication node 200 may further include an input interface device 240, an output interface device 250, a storage device 260, and the like. The respective components included in the communication node 200 may be connected by a bus 270 to communicate with each other.

However, the respective components included in the communication node 200 may be connected through individual interfaces or individual buses centering on the processor 210 instead of the common bus 270. For example, the processor 210 may be connected to at least one of the memory 220, the transceiver 230, the input interface device 240, the output interface device 250, and the storage device 260 through a dedicated interface.

The processor 210 may execute program commands stored in at least one of the memory 220 and the storage device 260. The processor 210 may refer to a central processing unit (CPU), a graphics processing unit (GPU), or a dedicated processor on which the methods according to the exemplary embodiments of the present invention are performed. Each of the memory 220 and the storage device 260 may be configured as at least one of a volatile storage medium and a nonvolatile storage medium. For example, the memory 220 may be configured with at least one of a read only memory (ROM) and a random access memory (RAM).

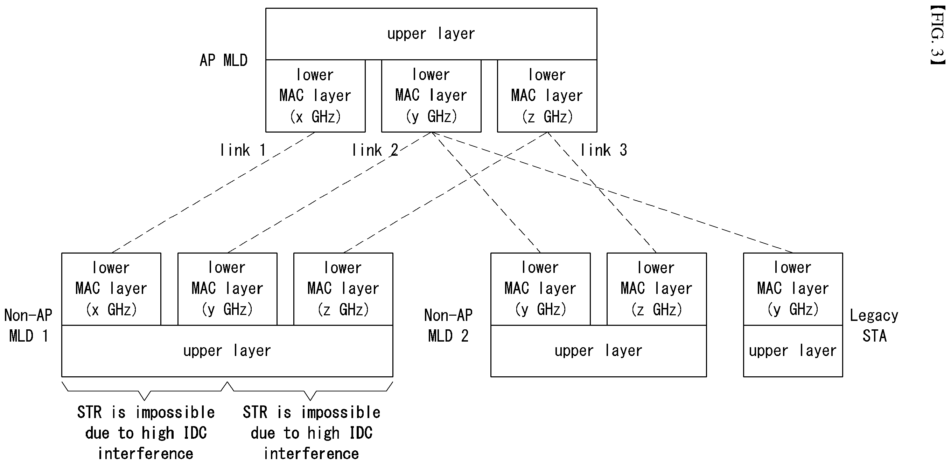

FIG. 3 is a conceptual diagram illustrating a first exemplary embodiment of a multi-link configured between multi-link devices (MLDs).

As shown in FIG. 3, an MLD may have one medium access control (MAC) address. In exemplary embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) affiliated with the non-AP MLD may have different MAC addresses. Each of the APs having different MAC addresses within the AP MLD may be in charge of each link, and may perform a role of an independent AP.

Each of the STAs having different MAC addresses within the non-AP MLD may be in charge of each link, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In exemplary embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a `communication node' or `lower entity'. The communication node (i.e., AP) may operate under control of an upper layer (or the processor 210 shown in FIG. 2). The non-AP MLD may include a plurality of STAs, and the plurality of STAs may operate in different links. Each of the plurality of STAs may be referred to as a `communication node' or `lower entity'. The communication node (i.e., STA) may operate under control of an upper layer (or the processor 210 shown in FIG. 2).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, each link may be referred to as a link 1, a link 2, a link 3, or the like. A link number may be set by an access point, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

Each of the AP MLD and the STA MLD may have an MLD MAC address, and each of the AP and the STA operating in each link may have a MAC address. The MLD MAC address of the AP MLD may be referred to as an AP MLD MAC address, and the MLD MAC address of the STA MLD may be referred to as a STA MLD MAC address. The MAC address of the AP may be referred to as an AP MAC address, and the MAC address of the STA may be referred to as a STA MAC address. In a multi-link negotiation procedure, the AP MLD MAC address and the STA MLD MAC address may be used. The address of the AP and the address of the STA may be exchanged and/or configured in the multi-link negotiation procedure.

When the multi-link negotiation procedure is completed, the AP MLD may generate an address table and manage and/or update the address table. One AP MLD MAC address may be mapped to one or more AP MAC addresses, and corresponding mapping information may be included in the address table. One STA MLD MAC address may be mapped to one or more STA MAC addresses, and corresponding mapping information may be included in the address table. The AP MLD may identify address information based on the address table. For example, when a STA MLD MAC address is received, the AP MLD may identify one or more STA MAC addresses mapped to the STA MLD MAC address based on the address table.

In addition, the STA MLD may manage and/or update the address table. The address table may include `mapping information between the AP MLD MAC address and the AP MAC address(es)' and/or `mapping information between the STA MLD MAC address and the STA MAC address(es)'. The AP MLD may receive a packet from a network, identify an address of a STA MLD included in the packet, identify link(s) supported by the STA MLD, and may identify STA(s) taking charge of the link(s) from the address table. The AP MLD may set STA MAC address(es) of the identified STA(s) as receiver address(es), and may generate and transmit frame(s) including the receiver address(es).

Meanwhile, an association procedure in a wireless LAN system may be performed as follows.

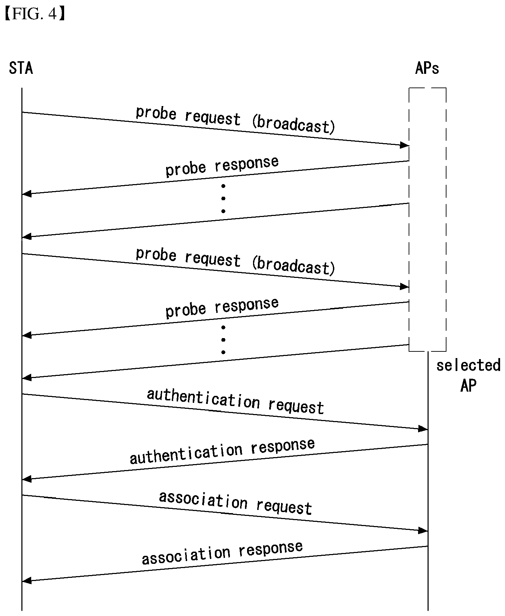

FIG. 4 is a sequence chart illustrating an association procedure of a station in a wireless LAN system.

As shown in FIG. 4, an association procedure of a STA in an infrastructure BSS may generally be divided into a probe step of detecting AP(s), an authentication step with detected AP(s), and an association step with the authenticated AP(s). The STA may be a STA MLD or a STA affiliated with the STA MLD, and the AP may be an AP MLD or an AP affiliated with the AP MLD.

The STA may detect neighboring APs using a passive scanning scheme or an active scanning scheme. When the passive scanning scheme is used, the STA may detect neighboring APs by overhearing beacons transmitted by APs. When the active scanning scheme is used, the STA may transmit a probe request frame, and may detect neighboring APs by receiving probe response frames that are responses to the probe request frame from the APs.

When the neighboring APs are detected, the STA may perform an authentication step with the detected AP(s). In this case, the STA may perform the authentication step with a plurality of APs. An authentication algorithm according to the IEEE 802.11 standard may be classified into an open system algorithm of exchanging two authentication frames, a shared key algorithm of exchanging four authentication frames, and the like.

The STA may transmit an authentication request frame based on the authentication algorithm according to the IEEE 802.11 standard, and may complete authentication with the AP by receiving an authentication response frame that is a response to the authentication request frame from the AP.

When the authentication with the AP is completed, the STA may perform an association step with the AP. In this case, the STA may select one AP among AP(s) with which the STA has performed the authentication step, and perform the association step with the selected AP. That is, the STA may transmit an association request frame to the selected AP, and may complete the association with the selected AP by receiving an association response frame that is a response to the association request frame from the selected AP.

Meanwhile, communication nodes (e.g., access points, stations, and the like) belonging to the wireless LAN system may perform transmission and reception operations of frames based on a point coordination function (PCF), hybrid coordination function (HCF), HCF controlled channel access (HCCA), distributed coordination function (DCF), enhanced distributed channel access (EDCA), and/or the like.

In the wireless LAN system, frames may be classified into a management frame, a control frame, and a data frame. The management frame may include an association request frame, association response frame, reassociation request frame, reassociation response frame, probe request frame, probe response frame, beacon frame, disassociation frame, authentication frame, deauthentication frame, action frame, and the like.

The control frame may include an acknowledgment (ACK) frame, block ACK request (BAR) frame, block ACK (BA) frame, power saving (PS)-Poll frame, request-to-send (RTS) frame, clear-to-send (CTS) frame, and the like. The data frame may be classified into a quality of service (QoS) data frame and a non-QoS data frame. The QoS data frame may refer to a data frame for which transmission according to a QoS is required, and the non-QoS data frame may indicate a data frame for which transmission according to a QoS is not required.

Meanwhile, in a wireless LAN system, a communication node (e.g., access point or station) may operate based on the EDCA scheme.

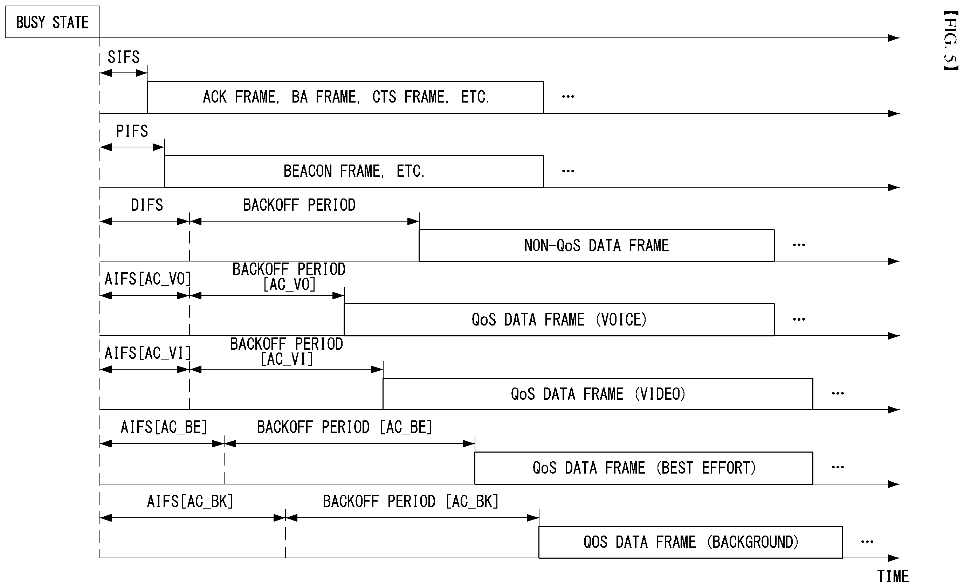

FIG. 5 is a timing diagram illustrating a first exemplary embodiment of an operation method of a communication node based on EDCA.

As shown in FIG. 5, a communication node desiring to transmit a control frame (or a management frame) may perform a channel state monitoring operation (e.g., carrier sensing operation) during a predetermined period (e.g., short interframe space (SIFS) or PCF IFS (PIFS)), and when the channel state is determined to be idle during the predetermined period (e.g., SIFS or PIFS), the communication node may transmit the control frame (or the management frame). For example, the communication node may transmit an ACK frame, a BA frame, a CTS frame, or the like when the channel state is determined to be idle during SIFS. Also, the communication node may transmit a beacon frame or the like when the channel state is determined to be idle during the PIFS. On the other hand, when it is determined that the channel state is busy during the predetermined period (e.g., SIFS or PIFS), the communication node may not transmit the control frame (or the management frame). Here, the carrier sensing operation may refer to a clear channel assessment (CCA) operation.

A communication node desiring to transmit a non-QoS data frame may perform a channel state monitoring operation (e.g., carrier sensing operation) during DCF IFS (DIFS), and when the channel state is determined to be idle during the DIFS, the communication node may perform a random backoff procedure. For example, the communication node may select a backoff value (e.g., a backoff counter) within a contention window according to the random backoff procedure and may perform a channel state monitoring operation (e.g., carrier sensing operation) during a period corresponding to the selected backoff value (hereinafter, referred to as `backoff period'). The communication node may transmit the non-QoS data frame when the channel state is determined to be idle in the backoff period.

A communication node desiring to transmit a QoS data frame may perform a channel state monitoring operation (e.g., carrier sensing operation) during an arbitration IFS (AIFS), and when the channel state is determined to be idle during the AIFS, the communication node may perform a random backoff procedure. The AIFS may be configured according to an access category (AC) of a data unit (e.g., protocol data unit (PDU)) included in the QoS data frame. The AC of the data unit may be as shown in Table 1 below.

**[Table 1]**

| **Priority** | **AC** | **Description** |
|---|---|---|
| Lowest | AC_BK | Background |
| | AC_BE | Best effort |
| Highest | AC_VI | Video |
| | AC_VO | Voice |

AC_BK may indicate background data, AC_BE may indicate data transmitted in the best effort manner, AC_VI may indicate video data, AC_VO may indicate voice data. For example, the length of the AIFS for the QoS data frame corresponding to each of AC_VO and AC_VI may be configured to be equal to the length of the DIFS. The length of the AIFS for the QoS data frame corresponding to each of AC_BE and AC_BK may be configured to be longer than the length of the DIFS. Here, the length of the AIFS for the QoS data frame corresponding to AC_BK may be configured to be longer than the length of the AIFS for the QoS data frame corresponding to AC_BE.

In the random backoff procedure, the communication node may select a backoff value (e.g., a backoff counter) within a contention window according to the AC of the QoS data frame. The contention window according to the AC may be as shown in Table 2 below. CWₘᵢₙ may indicate a minimum value of the contention window, CWₘₐₓ may indicate a maximum value of the contention window, and each of the minimum value and the maximum value of the contention window may be represented by the number of slots.

**[Table 2]**

| **AC** | **CWₘᵢₙ** | **CWₘₐₓ** |
|---|---|---|
| AC_BK | 31 | 1023 |
| AC_BE | 31 | 1023 |
| AC_VI | 15 | 31 |
| AC_VO | 7 | 15 |

The communication node may perform a channel state monitoring operation (e.g., carrier sensing operation) in the backoff period and may transmit the QoS data frame when the channel state is determined to be idle in the backoff period.

Hereinafter, data transmission and reception methods in a wireless LAN system will be described. Even when a method (e.g., transmission or reception of a signal) performed at a first communication node among communication nodes is described, a corresponding second communication node may perform a method (e.g., reception or transmission of the signal) corresponding to the method performed at the first communication node. That is, when an operation of a STA is described, an AP corresponding thereto may perform an operation corresponding to the operation of the STA. Conversely, when an operation of an AP is described, a STA corresponding thereto may perform an operation corresponding to the operation of the AP. In exemplary embodiments, operations of a STA may be interpreted as operations of a STA MLD, operations of a STA MLD may be interpreted as operations of a STA, operations of an AP may be interpreted as operations of an AP MLD, and operations of an AP MLD may be interpreted as operations of an AP.

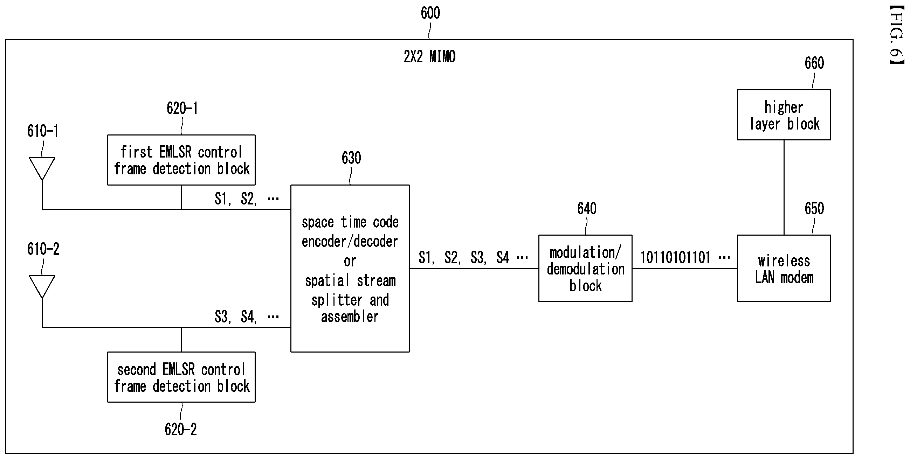

FIG. 6 is a block diagram illustrating a first exemplary embodiment of an enhanced multi-link single radio (EMLSR) device in a wireless LAN.

As shown in FIG. 6, an EMLSR device 600 may be an MLD supporting MLSR operations and/or EMLSR operations. The EMLSR device 600 may be referred to as an MLSR device. An EMLSR STA (or MLSR STA) may be a STA supporting MLSR operations and/or EMLSR operations, and an EMLSR AP (or MLSR AP) may be an AP supporting MLSR operations and/or EMLSR operations. The MLSR operation may mean an MLSR mode, and the EMLSR operation may mean an EMLSR mode. The EMLSR device 600 may include antennas 610-1 and 610-2, EMLSR control message detection blocks 620-1 and 620-2, a spatial stream processing block 630, a modulation and demodulation block 640, a wireless LAN modem 650, and/or a higher layer block 660. In exemplary embodiments, a spatial stream may be referred to as `SS'.

The EMLSR device 600 may include the plurality of antennas 610-1 and 610-2. The first antenna 610-1 may be used for a sensing operation and/or a reception operation of signals on a first link. The second antenna 610-2 may be used for a sensing operation and/or a reception operation of signals on a second link. A frequency at which the first link operates may be different from a frequency at which the second link operates. The sensing operation and/or reception operation performed by the first antenna and/or the second antenna may be referred to as `listening operation'. In order to simultaneously receive spatial stream signals, the first antenna 610-1 and the second antenna 610-2 may perform sensing operations and/or reception operations of signals on one of the first link and the second link. Among the plurality of antennas 610-1 and 610-2 included in the EMLSR device 600, one antenna may be a primary antenna, and the remaining antenna(s) may be secondary antenna(s). The primary antenna and secondary antenna(s) may be configured in advance. Alternatively, the primary antenna and the secondary antenna(s) may be configured in a negotiation procedure between the EMLSR device 600 and another device (e.g., AP MLD supporting EMLSR operations). An antenna performing a listening operation on a link having a low number (e.g., low index) may be configured as the primary antenna, and the remaining antenna(s) may be configured as the secondary antenna(s).

The first EMLSR control frame detection block 620-1 may be connected to or cooperate with the first antenna 610-1, and the second EMLSR control frame detection block 620-2 may be connected to or cooperate with the second antenna 610-2. Electromagnetic waves (e.g., signals) detected by the antennas 610-1 and 610-2 may be input to the EMLSR control frame detection blocks 620-1 and 620-2. The EMLSR control frame detection blocks 620-1 and 620-2 may determine whether the electromagnetic wave (e.g., signal) corresponds to a specific control frame (e.g., initial control frame). The EMLSR control frame detection blocks 620-1 and 620-2 may support only a predefined modulation and coding scheme (MCS) and may identify only predefined control frame formats. The formats of the predefined control frames (e.g., specific control frame, initial control frame) may include a request-to-send (RTS) frame, a multi-user (MU)-RTS trigger frame, and/or a buffer status report poll (BSRP) trigger frame.

When a specific control frame is detected by the EMLSR control frame detection blocks 620-1 and/or 620-2, the EMLSR device 600 may perform a reception operation for receiving data through multiple SSs by simultaneously using as many spatial streams as the number of spatial streams (e.g., the number of antennas) supported by the EMLSR device 600. In order to perform the reception operation for simultaneously receiving multiple spatial streams, a clear-to-send (CTS) frame may be transmitted through the first antenna 610-1 after a short inter-frame space (SIFS) from a time of detecting the specific control frame on the first link, and the second antenna 610-2 operating on the second link on which the specific control frame is not detected, may switch to the first link and operate on the first link. In other words, a reception radio chain (i.e., RX radio chain) may be switched to operate on the first link. In the present disclosure, the RX radio chain may refer to a radio chain. In addition, in the present disclosure, the radio chain may refer to an RX radio chain or an RX chain. Switching of an operating link of the second antenna 610-2 (e.g., switching of the radio chain) may start after the time of detecting the specific control frame on the first link, and may be completed until a SIFS elapses after transmitting the CTS signal after a SIFS elapses. Thereafter, multiple spatial streams (e.g., two spatial streams) may be received through the plurality of antennas 610-1 and 610-2. The operation of receiving the MU-RTS trigger frame and the operation of switching the radio chain to receive multiple spatial streams may be referred to as 'EMLSR operation'.

When a signal is detected by one of the plurality of antennas 610-1 and 610-2, and the signal is determined by the EMLSR control frame detection blocks 620-1 and 620-2 not to be the specific control frame, the signal may be delivered to the modulation/demodulation block 640 without going through the spatial stream processing block 630. The one antenna detecting the signal may be the primary antenna.

When the specific control frame is detected by the EMLSR control frame detection blocks 620-1 and 620-2, and the reception procedure for the multiple spatial streams is performed, the spatial stream processing block 630 may perform a rearrangement operation for signals (e.g., symbols) received through the plurality of antennas 610 -1 and 610-2. When a space time code is used, a single symbol may be generated into a plurality of symbols by a coding operation, and the plurality of symbols may be transmitted. The space time code may be an Alamouti code. The spatial stream processing block 630 may perform an operation of restoring the redundant symbols into the single symbol in a decoding procedure.

The output symbols of the spatial stream processing block 630 may be input to the modulation/demodulation block 640. The modulation/demodulation block 640 may generate bits by performing a demodulation operation on the symbols. The modulation/demodulation block 640 may perform a channel coding operation and/or a channel decoding operation. The output bits of the modulation/demodulation block 640 may be delivered to the wireless LAN modem 650. The wireless LAN modem 650 may perform medium access control (MAC) operations defined in the IEEE 802.11 standards. An output of the wireless LAN modem 650 may be delivered to the higher layer block 660. The higher layer block 660 may perform higher layer operations defined in the IEEE 802.11 standards. A series of operations performed after the specific control frame is detected by the EMLSR control frame detection block may be operations performed during the EMLSR operation.

In the EMLSR device 600, a transmission operation may be performed in the reverse order of the above-described reception operation.

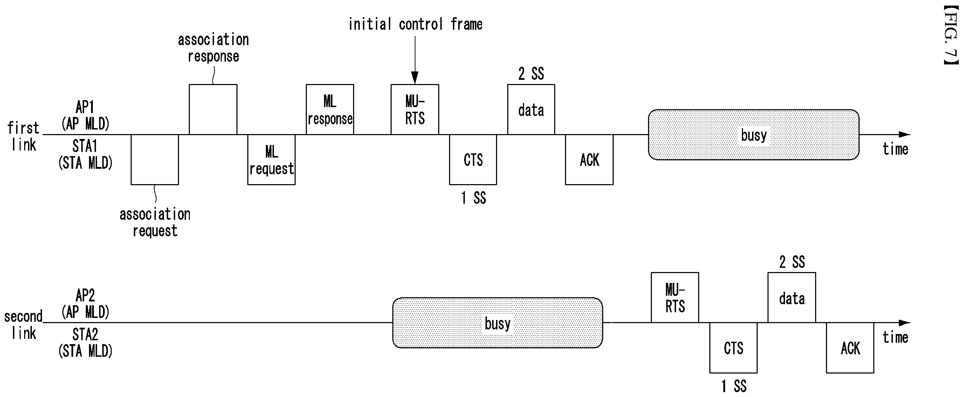

FIG. 7 is a timing diagram illustrating a first exemplary embodiment of a communication method in a device supporting EMLSR mode.

As shown in FIG. 7, communication may be performed using two spatial streams. A STA MLD may perform an association procedure with an AP MLD. The STA MLD may include a STA1 and a STA2, and the AP MLD may include an AP1 and an AP2. The association procedure may be performed between one STA (e.g., STA1 or STA2) affiliated with the STA MLD and one AP (e.g., AP1 or AP2) affiliated with the AP MLD.

The association procedure may be performed on one link among links supported by the AP MLD. In the association procedure, the STA MLD may transmit an association request frame to the AP MLD and receive an association response frame that is a response to the association request frame from the AP MLD. In the association procedure between the STA MLD and the AP MLD, multi-link (ML) capabilities may be negotiated. The ML capabilities may be negotiated in a transmission and reception procedure of ML request/response frames. In the corresponding procedure, ML capability information may be exchanged between the STA MLD and the AP MLD. The ML capability information may include information on the number of links and/or information on the number of radios supported by the MLD. When the STA MLD and/or AP MLD supports the EMLSR mode, the ML capability information may include information on the number of spatial streams. That is, the number of spatial streams may be negotiated between the STA MLD and the AP MLD.

The STA MLD and the AP MLD may support the EMLSR mode. Supporting the EMLSR mode may mean that the EMLSR STA MLD transmits and receives messages with the AP MLD using multiple spatial streams on one link while performing a listening operation and an EMLSR operation. The EMLSR STA MLD may perform a listening operation for waiting to receive an initial control frame while performing continuous channel sensing on multiple links in order to receive an initial control frame transmitted by the AP on one of the multiple links. When the EMLSR STA MLD receives a MU-RTS trigger frame on one of the multiple links, the EMLSR STA MLD may switch radio chain(s) waiting for reception on other links to a link through which the MU-RTS trigger frame is received, so that the radio channel(s) are able to perform reception on the corresponding link. That is, a frequency at which the radio chain(s) operate may be adjusted to a frequency of the link through which the MU-RTS trigger frame is received. The EMLSR operation, which is an operation to receive data using multiple spatial streams by switching all available radio chains to the link through which the MU-RTS trigger frame is received, may be performed. The EMLSR STA MLD may receive data and transmit a reception response frame (e.g., block ACK), which is an immediate response to the data. Thereafter, if there is no additional data to receive, the EMLSR STA MLD may switch the radio chain(s) to other link(s) to wait for reception of MU-RTS trigger frame(s) on multiple links, and may operate in a listening mode in which the EMLSR STA MLD performs channel sensing to receive MU-RTS trigger frame(s). In the present exemplary embodiment, the STA MLD may refer to an EMLSR STA MLD supporting EMLSR mode and operation. In the present exemplary embodiment, the EMLSR STA MLD may refer to a STA MLD that supports EMLSR mode and operation. If data to be transmitted to the EMLSR STA MLD that supports EMLSR mode occurs in the AP MLD, the AP MLD may initiate a channel access procedure for transmission of the data. The AP MLD may transmit an initial control frame (e.g., MU-RTS frame) to the STA MLD on one link (e.g., first link) where the channel access procedure succeeds first among the first link and the second link. When the channel access procedures succeed on both the first link and the second link, and backoff counter values thereof are 0 due to the success of the channel access procedures, the AP MLD may transmit a MU-RTS trigger frame to the STA MLD using a link that is in an idle state at the time of data occurrence. Alternatively, the AP MLD may select a link with the best state (e.g., reception state, link state, channel state) among links that are in the idle state at the time of data occurrence, and transmit a MU-RTS trigger frame to the STA MLD on the selected link.

The MU-RTS trigger frame may be a predefined control frame (e.g., initial control frame). The MU-RTS trigger frame may be detected by an EMLSR control frame detection block connected to or linked to antenna(s) included in the STA MLD. The STA MLD may receive the MU-RTS trigger frame from the AP MLD on the first link. The STA MLD may perform a radio chain switching (RX radio chain switching) operation for an antenna operating on the second link through which the MU-RTS trigger frame is not received. The radio chain switching may refer to changing from a frequency of a link on which the radio chain performs a transmission/reception operation to a transmission and reception frequency of another link in order to perform a transmission and reception operation on the another link. When there are radio chains operating at frequencies of the respective links to perform listening operations on the first link and the second link, if the STA MLD receives the MU-RTS trigger frame on the first link, the STA MLD may switch the radio chain operating at the frequency of the second link to operate at the frequency of the first link, so that the two radio chains operate on the first link. This operation may be referred to as the radio chain switching operation. When the radio chain switching operation from the second link to the first link is performed, the second antenna 610-2, which was performing the listening operation on the second link, may be switched to the first link and may be used for transmission and reception on the first link. Accordingly, the STA MLD may perform a data reception operation using multiple spatial streams through a plurality of antennas (e.g., two antennas) on the first link.

If the state of the STA MLD is in a state capable of receiving data, the STA MLD may transmit a CTS frame to the AP MLD on the first link (e.g., the link through which the MU-RTS trigger frame is received) after a SIFS elapses from a reception time of the MU-RTS trigger frame. The CTS frame may be a simultaneous (S)-CTS frame. In this case, multiple STAs may simultaneously transmit CTS frames of the same type. The plurality of STAs may be STAs within the STA MLD. The same type of CTS frame may be indicated by the MU-RTS trigger frame. The CTS frame may be transmitted using a single spatial stream (e.g., one spatial stream) through a single antenna. The AP MLD may receive the CTS frame from the STA MLD, and may transmit a data frame on the first link using two spatial streams through two antennas after a SIFS elapses from a reception time of the CTS frame. The STA MLD may receive the data frame transmitted by the AP using two spatial streams through two antennas.

The STA MLD may receive the data frame transmitted by the AP using two spatial streams through two antennas on the first link. The STA MLD may transmit a reception response frame (e.g., ACK or block ACK) to the AP MLD on the first link after a SIFS elapses from a reception time of the data frame. The reception response frame may be transmitted using one spatial stream or two spatial streams through one antenna or two antennas. One spatial stream may be referred to as '1 spatial stream (SS)', and two spatial streams may be referred to as `2 SS'. The second antenna 610-2 of the STA MLD may perform an RX radio channel switching operation back to the second link after the data reception and transmission operation is completed. That is, after the data reception and transmission on the first link is completed, the STA MLD may perform a listening operation, which is a channel sensing and/or reception operation for frame reception, using the first antenna 610-1 on the first link, and after the data transmission and reception on the first link is completed, the STA MLD may perform a radio chain switching operation so that the second antenna 610-2 operates on the second link and performs a channel sensing and/or reception operation for frame reception on the second link.

If data to be transmitted to the STA MLD occurs again in the AP MLD, the AP MLD may transmit a data frame based on the above-described procedure. If a channel access procedure succeeds on the second link among the first link and the second link, the above-described procedure may be performed on the second link.

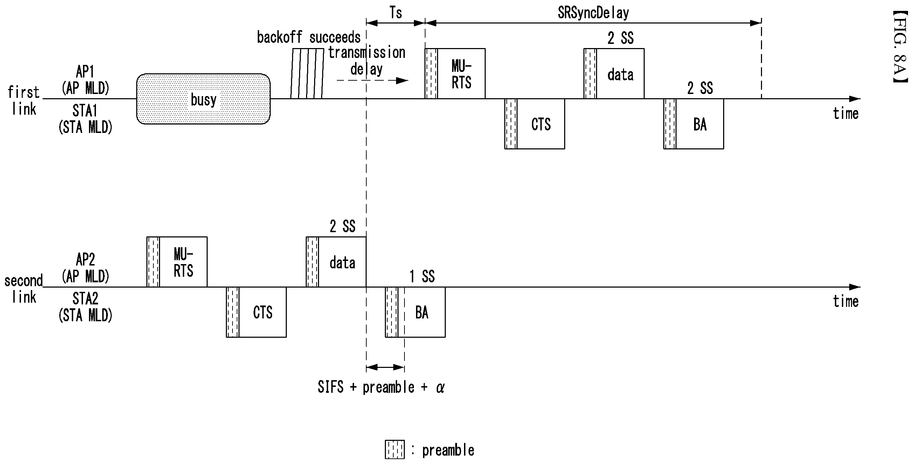

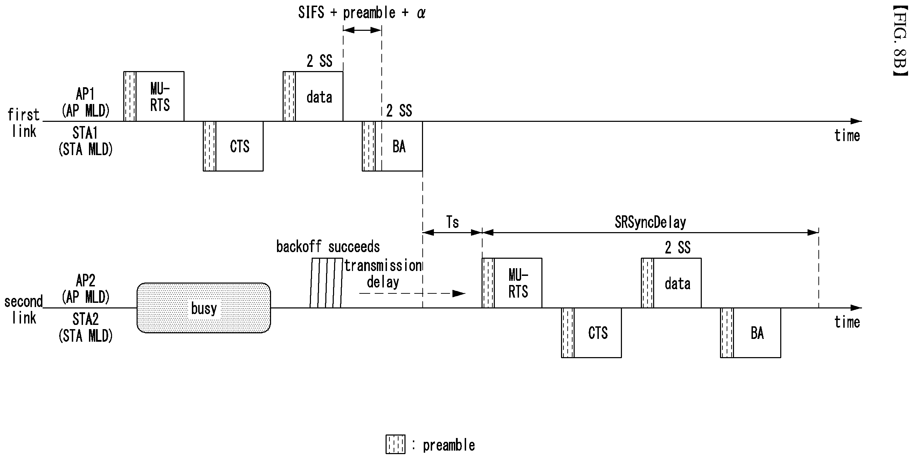

FIG. 8A is a timing diagram illustrating a second exemplary embodiment of a communication method in a device supporting EMLSR mode, and FIG. 8B is a timing diagram illustrating a third exemplary embodiment of a communication method in a device supporting EMLSR mode.

As shown in FIGS. 8A and 8B, communication between a STA MLD and an AP MLD may be performed considering a delay time of radio chain switching. The STA MLD and the AP MLD may support the EMLSR mode. Supporting the EMLSR mode may mean that the EMLSR STA MLD transmits and receives messages with the AP MLD using multiple spatial streams on one link while performing a listening operation and an EMLSR operation. The EMLSR STA MLD may perform a listening operation for waiting to receive an initial control frame while performing continuous channel sensing on multiple links in order to receive an initial control frame transmitted by the AP on one of the multiple links. When the EMLSR STA MLD receives a MU-RTS trigger frame on one of the multiple links, the EMLSR STA MLD may switch radio chain(s) waiting for reception on other links to a link through which the MU-RTS trigger frame is received, so that the radio channel(s) are able to perform reception on the corresponding link. That is, a frequency at which the radio chain(s) operate may be adjusted to a frequency of the link through which the MU-RTS trigger frame is received. The EMLSR operation, which is an operation to receive data through multiple spatial streams by switching all available radio chains to the link through which the MU-RTS trigger frame is received, may be performed. The EMLSR STA MLD may receive data and transmit a reception response frame (e.g., block ACK), which is an immediate response to the data. Thereafter, if there is no additional data to receive, the EMLSR STA MLD may switch the radio chain(s) to other link(s) to wait for reception of MU-RTS trigger frame(s) on multiple links, and may operate in a listening mode in which the EMLSR STA MLD performs channel sensing to receive MU-RTS trigger frame(s). In the present exemplary embodiment, the STA MLD may refer to an EMLSR STA MLD supporting EMLSR mode and operation. In the present exemplary embodiment, the EMLSR STA MLD may refer to a STA MLD that supports EMLSR mode and operation. If data to be transmitted to the EMLSR STA MLD that supports EMLSR mode occurs in the AP MLD, the AP MLD may initiate a channel access procedure for transmission of the data. The AP MLD may transmit an initial control frame (e.g., MU-RTS frame) on one link (e.g., second link in FIG. 8A or first link in FIG. 8B) where the channel access procedure succeeds first among the first link and the second link. Alternatively, when the channel access procedures succeed on both the first link and the second link, the AP MLD may select a link (e.g., second link in FIG. 8A or first link in FIG. 8B) with the best state (e.g., reception state, link state, channel state), and transmit an initial control frame (e.g., MU-RTS trigger frame) on the selected link.

The STA MLD may receive the MU-RTS trigger frame from AP MLD. If the STA MLD is in a state capable of receiving data, the STA MLD may transmit a CTS frame to the AP MLD after a SIFS elapses from a reception time of the MU-RTS trigger frame. The CTS frame may be transmitted using a signal spatial stream through one antenna.

The AP MLD may receive the CTS frame from the STA MLD, and may transmit a data frame using two spatial streams through two antennas after a SIFS elapses from a reception time of the CTS frame. The STA MLD may receive the data frame transmitted by the AP MLD using two spatial streams through two antennas. The STA MLD may transmit a reception response frame (e.g., ACK frame or BA frame) to the AP MLD after a SIFS elapses from a reception time of the data frame. The reception response frame may be transmitted using one spatial stream or two spatial streams through one antenna or two antennas. In the exemplary embodiment of FIG. 8A, the MU-RTS trigger frame, CTS frame, data frame, and reception response frame may be transmitted and received on the second link. In the exemplary embodiment of FIG. 8B, the MU-RTS trigger frame, CTS frame, data frame, and reception response frame may be transmitted and received on the first link. In exemplary embodiments, the reception response frame may be interpreted as a BA frame.

A radio chain switching time Ts may vary depending on the number of spatial streams used for transmission of the reception response frame (e.g., BA frame). The radio chain switching time Ts may be less than 100us. The radio chain switching time Ts may be set to a different value for each STA MLD (or STA). The STA MLD may set the radio chain switching time Ts, and may inform the AP MLD of the radio chain switching time Ts in the association procedure between the STA MLD and the AP MLD. The radio chain switching time Ts may be included in capability information transmitted to the AP MLD. Alternatively, the AP MLD may set the radio chain switching time Ts and inform the STA MLD of the radio chain switching time Ts in the association procedure between the STA MLD and the AP MLD. The radio chain switching time Ts may be included in capability information transmitted to the STA MLD.

When the reception response frame is transmitted using one spatial stream through one antenna (e.g., in case of the exemplary embodiment of FIG. 8A), the STA MLD may switch an operating link of another antenna other than the one antenna used for transmission of the reception response frame to another link (e.g., first link in FIG. 8A) after reception of the data frame. The switching of the operating link of the antenna may be accomplished by switching the radio chain, and switching the radio chain may take the radio chain switching time Ts. Accordingly, a time after the radio chain switching time Ts elapses from a reception completion time of the data frame on the second link may be a time when the radio chain switching for one radio chain of the STA MLD from the second link to the first link is completed. Since the STA MLD may perform a listening operation such as a sensing and/or reception operation on the switched link after the radio chain switching is completed, if the AP MLD transmits a MU-RTS trigger frame on the first link after a completion time of the radio chain switching, the STA MLD may receive the MU-RTS trigger frame from the AP MLD.

When the reception response frame is transmitted using two spatial streams through two antennas (e.g., in case of the exemplary embodiment of FIG. 8B), the STA MLD may switch an operating link of one antenna among antennas used for transmission of the reception response frame to another link (e.g., second link in FIG. 8B) after transmission of the reception response frame. Since one antenna not subjected to the link switching is not a target of the radio chain switching, a normal operation of the EMLSR receiver, which is a normal operation with this antenna, may be performed after transmission of the reception response frame. That is, a listening operation for continuous sensing and/or reception operation may be performed after transmission of the reception response frame on the first link.

The switching of the operating link of the antenna may be accomplished by switching the radio chain, and the switching of the radio chain may take the radio chain switching time Ts. Therefore, a time after the radio chain switching time Ts elapses from a transmission completion time of the reception response frame on the first link may be a time when radio chain switching for one radio chain of the STA MLD from the first link to the second link is completed. The STA MLD may perform a listening operation for performing a sensing and/or reception operation on the second link which is the switched link, after completion of the radio chain switching in which one antenna operating on the first link is switched to the second link. Accordingly, when the AP MLD transmits a MU-RTS trigger frame on the second link, the AP MLD may need to transmit the MU-RTS on the second link after the completion time of the radio chain switching, so that the STA MLD receives the MU-RTS frame from the AP MLD.

In the exemplary embodiment of FIG. 8A, the STA MLD may transmit the reception response frame on the second link using one spatial stream through two antennas. In the exemplary embodiment of FIG. 8B, the STA MLD may transmit the reception response frame on the first link using two spatial streams through two antennas. The AP MLD may calculate a completion time of the radio chain switching. In order to calculate the completion time of the radio chain switching, a time corresponding to (SIFS + length of preamble + α) may be required. α may be a time required for a reception and decoding operations of a preamble. According to a preamble decoding operation, the number of spatial streams may be identified based on information included in the preamble. The AP MLD may calculate an application time of the radio chain switching time Ts after the time corresponding to (SIFS + length of preamble + α) elapses from a transmission completion time of the data frame.

When the reception response frame is transmitted using one spatial stream through one antenna, the AP MLD may transmit a MU-RTS trigger frame on another link other than a link on which a transmission and reception operation is currently being performed, after a time corresponding to (Ts - (SIFS + length of preamble + α)) elapses from a completion time of the calculation of the completion time of the radio channel switching. When a channel access operation succeeds on another link (e.g., when a backoff counter value thereof is maintained at 0 due to a success of a backoff operation), the AP MLD may apply the radio chain switching time Ts, and may transmit a MU-RTS trigger frame after completion of the radio chain switching time Ts.

A duration value set in a MAC header of the MU-RTS trigger frame transmitted by the AP MLD may be used to indicate the number of spatial streams to be used by the STA MLD for transmission of the reception response frame. The STA MLD may receive the MU-RTS trigger frame from the AP MLD, and may identify the number of spatial streams to be used for transmission of the reception response frame based on the duration value set in the MAC header of the MU-RTS trigger frame. If the number of spatial streams indicated by the AP MLD is acceptable, the STA MLD may generate a CTS frame including a duration value indicating an end time of a duration indicated by the MU-RTS trigger frame, and transmit the CTS frame to the AP MLD. The STA MLD receiving the data frame may switch radio chain(s) of antenna(s) other than a radio chain of an antenna required for transmission of the reception response frame to another link, and may desire to quickly receive another data frame on the another link. In this case, the STA MLD may generate a CTS frame including a MAC header including a duration value indicating an end time of the reception response frame transmitted using one spatial stream through one antenna, and transmit the CTS frame to the AP MLD.

The STA MLD may determine the number of spatial streams used for transmission of the reception response frame (e.g., BA frame) based on the number of MPDUs in which error(s) occurred among MPDUs included in the data frame received from the AP MLD. If no error occurred in all MPDUs included in the data frame received from the AP MLD, the STA MLD may generate BA information including an indicator meaning `ALL ACK' instead of a BA bitmap, and transmit a BA frame including the BA information. The length of the indicator indicating `ALL ACK' may be shorter than the length of the BA bitmap. If error(s) occurred in most of the MPDUs included in the data frame received from the AP MLD, the STA MLD may generate BA information including an indicator meaning `ALL NACK' instead of a BA bitmap, and may transmit a BA frame including the BA information. In this case, even when the BA frame is transmitted using one spatial stream, a time required for transmission of the BA frame may be short. Accordingly, the BA frame may be transmitted using one spatial stream, and other radio chains may be switched to perform a listening operation for waiting for reception of MU-RTS trigger frame(s) on other link(s).

The STA MLD may starts a *SRSyncDelay* timer applied to a link for which the radio chain switching has completed (e.g., first link in FIG. 8A, second link in FIG. 8B) from an expiration time of Ts (e.g., a switching completion time of the radio chain switching). The *SRSyncDelay* timer may be referred to as a medium synchronization delay timer. The STA MLD may not perform a channel access operation for a time corresponding to the SRSyncDelay timer on a link to which the SRSyncDelay timer is applied. Before the *SRSyncDelay timer* is operated on the link to which the *SRSyncDelay timer* is applied, the radio chain may be in a state of being switched to a frequency of another link for the EMLSR operation on the another link, making channel sensing and/or reception operations impossible, and accordingly, the STA MLD may not receive data frame(s) transmitted by other communication node(s), and may not set a network allocation vector (NAV). That is, it is not possible to know whether other communication nodes occupy a link during a period in which a channel sensing and/or reception operation is impossible on the link on which the SRSyncDelay timer is operated. In order for the STA MLD to perform a NAV setting operation, the STA MLD may need to perform a channel sensing and/or reception operation. That is, the NAV setting operation may include a channel sensing and/or reception operation. The channel sensing may also be referred to as 'Clear Channel Assessment (CCA)', which determines whether a channel is occupied. If a channel is determined to be occupied by a frame as a result of the channel sensing, the STA MLD may decode the frame and read a MAC header thereof. When a receiver address (RA) set in the MAC header is not an address of a STA of the STA MLD in charge of the link on which the STA MLD operates, the STA MLD may set a NAV, a prohibition time during which transmission is not performed during a transmission time which is set in the MAC header. The transmission time (i.e., duration) may include a time required for transmission/reception of the data frame, SIFS, and a time required for transmission and reception of the reception response frame, and a plurality of data frames and a plurality of reception response frames may be transmitted/received within the transmission time. When the STA MLD fails to set the NAV because it fails to perform a channel sensing and/or reception operation on a certain link, the STA MLD may not know channel occupancy information of other communication nodes, and cannot use a medium according to a channel occupancy state. Using the medium according to the channel occupancy state of other communication node(s) may be referred to as `medium synchronization'. If a NAV is not set and the medium cannot be used according to the channel occupancy state, it is said that `medium synchronization is lost'. When a channel sensing and/or reception operation becomes possible on the link for which media synchronization is lost due to the failure of setting the NAV, performing a channel access operation and transmitting a frame immediately thereafter may cause collision(s) with frame(s) from other communication nodes. In this reason, a *SRSyncDelay* timer to wait for a sufficient time without performing a channel access on the corresponding link may be performed.

Therefore, in order to perform channel sensing and/or reception operations on a link that has lost medium synchronization and not perform transmission operations for a sufficiently long period of time to reuse the medium in accordance with the channel occupancy state of other communication nodes, the STA MLD may start the *SRSyncDelay* timer. The *SRSyncDelay* timer value may be a preset value. Alternatively, the *SRSyncDelay* timer value may be set in the association procedure between the STA MLD and the AP MLD or ML capability negotiation procedure between the STA MLD and the AP MLD. On the link where the *SRSyncDelay* timer operates for the time corresponding to the *SRSyncDelay* timer value, if the AP MLD initiates a data transmission procedure by transmitting a MU-RTS trigger frame, the STA MLD may transmit a CTS frame in response to the MU-RTS trigger frame. The AP MLD may transmit data to the STA MLD using multiple spatial streams through multiple antennas after a SIFS elapses after receiving the CTS of the STA MLD. The STA MLD may receive the data from the AP MLD using multiple spatial streams through multiple antennas, and may transmit a reception response frame (e.g., ACK or block ACK frame) after a SIFS elapses in response to the received data frame.

If a frame (e.g., data frame) is normally received on the link on which the *SRSyncDelay* timer operates during the time corresponding to the *SRSyncDelay* timer value, the STA MLD may end the *SRSyncDelay* timer. A case in which a frame is normally received may refer to a case in which the frame is received regardless of an RA set in a MAC header of the frame and the frame is successfully decoded including values (e.g., duration) set in the MAC header without error(s). The communication node may set a NAV if it successfully decodes the values set in the MAC header. A case in which the NAV is set may correspond to a case where medium synchronization is acquired according to a channel occupancy state of other communication nodes. On the link where the *SRSyncDelay* timer operates during operation of the *SRSyncDelay* timer, the STA MLD may detect a frame (e.g., data frame) transmitted from another communication node based on an energy detection operation, and may fail to decode a MAC header of the frame and may not set a NAV. In this case, the STA MLD may end the *SRSyncDelay* timer if the *SRSyncDelay* timer is running after an extended inter-frame space (EIFS) elapses from an end time of detecting the frame.

The AP MLD may know a transmission state (e.g., medium occupancy state) of communication nodes on all links. That is, the AP MLD may always achieve medium synchronization on all links. Accordingly, on a link where the *SRSyncDelay* timer operates in the STA MLD, if there is no data transmission/reception procedure in progress by communication nodes while the *SRSyncDelay* timer is operating, the AP MLD may transmit a MU-RTS trigger frame indicating to end the *SRSyncDelay* timer. The above-described MU-RTS trigger frame may be referred to as an *SRSyncDelay* end MU-RTS trigger frame. A duration value of a MAC header included in the *SRSyncDelay* end MU-RTS trigger frame may be set to indicate an end time of the *SRSyncDelay* end MU-RTS trigger frame. The STA MLD may receive the *SRSyncDelay* end MU-RTS trigger frame from the AP MLD. In this case, the STA MLD may not transmit a CTS frame to the AP MLD in response to the *SRSyncDelay* end MU-RTS trigger frame. In addition, the STA MLD may end the *SRSyncDelay* timer.

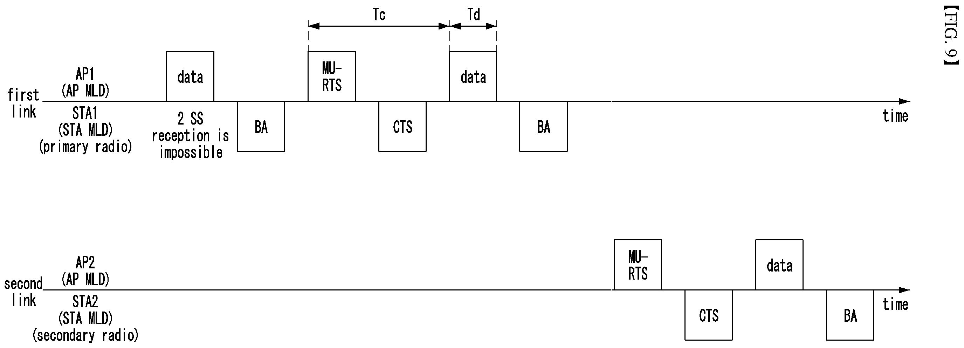

FIG. 9 is a timing diagram illustrating a fourth exemplary embodiment of a communication method in a device supporting EMLSR mode.

As shown in FIG. 9, the number of spatial streams used for transmitting and receiving a data frame may be dynamically selected. In the present exemplary embodiment, a STA MLD may mean an EMLSR STA MLD supporting EMLSR mode and operation. In the present exemplary embodiment, an EMLSR STA MLD may mean a STA MLD that supports EMLSR mode and operation. The STA MLD may perform sensing and/or reception operations on multiple links using multiple antennas. When a MU-RTS trigger frame, which is a specific control frame (e.g., initial control frame), is received through sensing and/or reception operations, the STA MLD may perform an operation of switching radio chain(s) performing sensing and/or reception operations on other link(s) to a link on which the MU-RTS trigger frame is received. After completion of the switching operation of the radio chain(s), the STA MLD may receive a data frame using a plurality of spatial streams through a plurality of antennas. That is, the STA MLD may transmit a CTS frame to the AP MLD in response to the MU-RTS trigger frame received from the AP MLD, and then receive a data frame using a plurality of spatial streams through a plurality of antennas.

When a transmission time of the data frame is Td and [transmission time of the MU-RTS trigger frame + SIFS + transmission time of the CTS frame + SIFS] is Tc, it may be established that Td << Tc. That is, when the length of the data frame is shorter, an execution time of a transmission procedure of a data frame using a single spatial stream may be shorter than an execution time of a transmission procedure of a data frame using a plurality of spatial streams initiated by transmission of the MU-RTS trigger frame.

In order to select the number of spatial streams for transmitting and receiving a data frame, one of a plurality of radio chains may be configured as a primary radio. A signal input to the primary radio may not go through a spatial stream processing block (e.g., spatial stream processing block 630 shown in FIG. 6), but may be delivered to a modulation/demodulation block (e.g., modulation/demodulation block 640 shown in FIG. 6). That is, the signal may be decoded in the modulation/demodulation block. When the STA MLD is able to perform a decoding operation on signals received through any radio chain, configuration of the primary radio may not be necessary. When one spatial stream and one antenna are used to transmit a data frame, the AP MLD may directly transmit the data frame to the STA MLD. When multiple spatial streams corresponding to the number of radio chains supported by the STA MLD are used to transmit a data frame, the AP MLD may transmit a MU-RTS trigger frame first, and may transmit the data frame using the multiple spatial streams after receiving a CTS frame in response to the MU-RTS trigger frame.

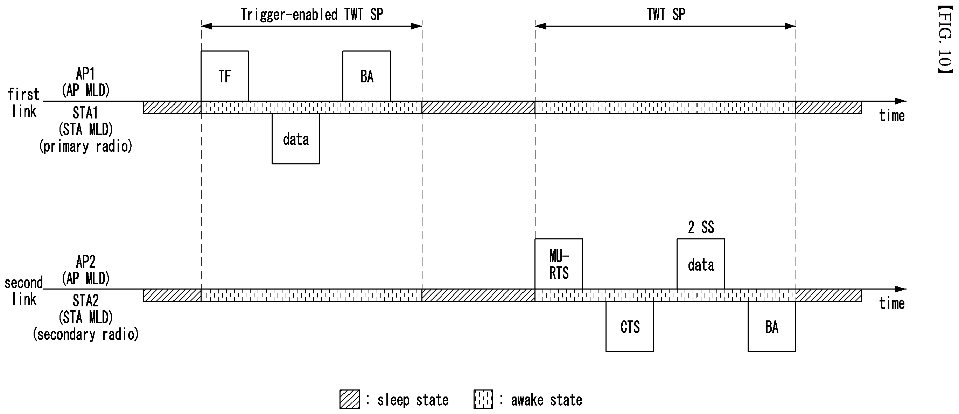

FIG. 10 is a timing diagram illustrating a first exemplary embodiment of a power saving method through selective use of the number of spatial streams.

As shown in FIG. 10, in the present exemplary embodiment, a STA MLD may mean an EMLSR STA MLD supporting EMLSR mode and operation. In the present exemplary embodiment, an EMLSR STA MLD may mean a STA MLD that supports EMLSR mode and operation. In order to select the number of spatial streams for transmitting and receiving a data frame, one of a plurality of radio chains in the STA MLD may be configured as a primary radio. A signal input to the primary radio of the STA MLD may not go through a spatial stream processing block (e.g., spatial stream processing block 630 shown in FIG. 6), but may be delivered to a modulation/demodulation block (e.g., modulation/demodulation block 640 shown in FIG. 6). That is, the signal may be decoded in the modulation/demodulation block.

A target wake time (TWT) service period (SP), which is a period in which the STA and the AP operate in an awake state for power saving, may be negotiated, and a transmission and reception operation of a data frame may be performed within the TWT SP. If a trigger-enabled TWT SP is negotiated, the STA may transmit a data frame in response to a trigger frame (TF) received from the AP within the trigger-enabled TWT SP. The trigger frame (TF) may not be a specific control frame (e.g., initial control frame) that initiates transmission using a plurality of spatial streams. Accordingly, the AP (e.g., AP MLD) may transmit the trigger frame (TF) through one spatial stream and one antenna using the primary radio. To transmit the data frame through a plurality of spatial streams and a plurality of antennas, the AP (e.g., AP MLD) may initiate a transmission procedure of the data frame by transmitting a specific control frame (e.g., initial control frame such as MU-RTS trigger frame) on one TWT link among TWT links.

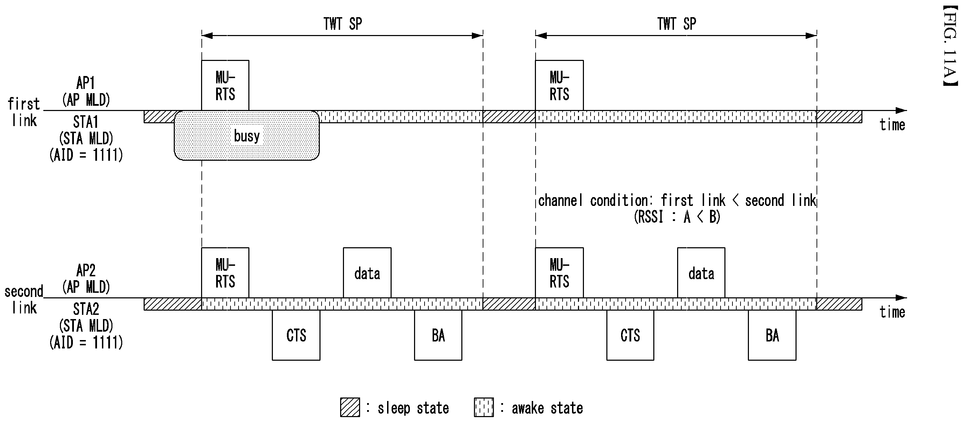

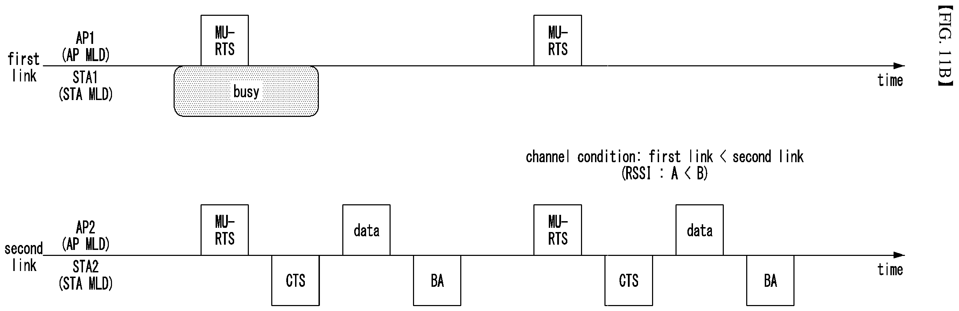

FIG. 11A is a timing diagram illustrating a first exemplary embodiment of a method for selecting a link through transmission of a plurality of MU-RTS trigger frames, and FIG. 11B is a timing diagram illustrating a second exemplary embodiment of a method for selecting a link through transmission of a plurality of MU-RTS trigger frames.

As shown in FIGS. 11A and 11B, in the present exemplary embodiment, a STA MLD may mean an EMLSR STA MLD supporting EMLSR mode and operation. In the present exemplary embodiment, an EMLSR STA MLD may mean a STA MLD that supports EMLSR mode and operation. A MU-RTS trigger frame may be a predefined control frame (e.g., initial control frame). An AP MLD may initiate a transmission procedure using multiple spatial streams through multiple antennas by transmitting a MU-RTS trigger frame to the STA MLD on one of the plurality of links. In this case, a channel state of each link may not be considered. The AP MLD may transmit MU-RTS trigger frames on available links. The STA MLD may select a link with the best state (e.g., reception state, link state, channel state) among links on which the MU-RTS trigger frames are received, and transmit a CTS frame on the selected link. The STA MLD may perform a radio chain switching operation for switching radio chains operating on other unselected links to the selected link from a time of selecting the link. When the radio chain switching operation is completed, the STA MLD may receive a data frame from the AP MLD through a plurality of spatial streams and a plurality of antennas on the link where the CTS frame is transmitted.

The STA MLD may not receive one or more MU-RTS trigger frames transmitted by the AP MLD on multiple links due to interference (e.g., interference from a hidden node). In this case, the STA MLD may select a link with the best state (e.g., reception state, link state, channel state) among link(s) on which the MU-RTS trigger frame(s) are normally received, and transmit a CTS frame on the selected link. The STA MLD may perform a radio chain switching operation for switching radio chains operating on other unselected links to the selected link from a time of selecting the link. When the radio chain switching operation is completed, the STA MLD may receive a data frame from the AP MLD through a plurality of spatial streams and a plurality of antennas on the link where the CTS frame is transmitted.

The exemplary embodiments of the present disclosure may be implemented as program instructions executable by a variety of computers and recorded on a computer-readable medium. The computer-readable medium may include a program instruction, a data file, a data structure, or a combination thereof. The program instructions recorded on the computer-readable medium may be designed and configured specifically for the present disclosure or can be publicly known and available to those who are skilled in the field of computer software.

Examples of the computer-readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. An operation method of a first device in a wireless local area network (LAN), comprising:
performing a first communication with a second device on a first link;
performing a listening operation on one or more links after the first communication ends; and
starting a delay timer on a second link among the one or more links,
wherein the first device does not initiate a frame transmission operation on the second link during a time corresponding to the delay timer.

2. The operation method according to claim 1, further comprising, after starting the delay timer, receiving a first frame from the second device on the second link, wherein in response to reception of the first frame, a second communication between the first device and the second device is performed on the second link.

3. The operation method according to claim 1, wherein the performing of the first communication comprises: switching one or more receive chains of the first device operating on the second link to the first link, wherein the switched one or more receive chains are used for reception of a plurality of spatial streams.

4. The operation method according to claim 1, further comprising, after performing the first communication, switching one receive chain among one or more receive chains used for the first communication on the first link to the second link, wherein the switched one receive chain is used to perform the listening operation on the second link.

5. The operation method according to claim 2, wherein the first frame is an initial control frame.

6. The operation method according to claim 5, wherein the initial control frame is a multi-user request-to-send (MU-RTS) trigger frame or an RTS frame.

7. The operation method according to claim 1, wherein the delay timer starts when the first device fails to perform a channel sensing or reception operation on the second link for a predetermined period.

8. The operation method according to claim 1, wherein the delay timer is set in an association procedure or a multi-link (ML) capability negotiation procedure between the first device and the second device.

9. The operation method according to claim 1, wherein the listening operation is a wireless channel sensing operation and/or a wireless signal reception operation.

10. The operation method according to claim 1, wherein the performing of the first communication comprises:
receiving a MU-RTS trigger frame from the second device;
transmitting a clear-to-send (CTS) frame to the second device in response to the MU-RTS trigger frame;
receiving a data frame from the second device; and
transmitting a reception response frame for the data frame to the second device,
wherein the data frame is received using a plurality of spatial streams, and the reception response frame is transmitted using one spatial stream or the plurality of spatial streams.

11. The operation method according to claim 10, wherein the performing of the first communication comprises: switching receive chains operating on other link(s) of the first device to the first link, wherein the switched receive chains are used for reception of the plurality of spatial streams.

12. A station (STA) multi-link device (MLD) in a wireless local area network (LAN), the STA MLD comprising:
a processor;
a first STA operating on a first link based on control of the processor;
a second STA operation on a second link based on control of the processor; and
a memory storing one or more instructions executable by the processor,
wherein the one or more instructions are executed to:
cause the first STA to perform a first communication with a first access point (AP) affiliated with an AP MLD on the first link;
cause the first STA and the second STA to perform listening operations after the first communication ends; and
cause the second STA to start a delay timer on the second link,
wherein the second STA does not initiate a frame transmission operation on the second link during a time corresponding to the delay timer.

13. The STA MLD according to claim 12, wherein the one or more instructions are executed to, after the delay timer is started, receive a first frame from a second AP affiliated with the AP MLD on the second link, wherein in response to reception of the first frame, a second communication between the second STA and the second AP is performed on the second link.

14. The STA MLD according to claim 13, wherein the first frame is an initial control frame.

15. The STA MLD according to claim 14, wherein the initial control frame is a multi-user request-to-send (MU-RTS) trigger frame or an RTS frame.

16. The STA MLD according to claim 12, wherein in the performing of the first communication, the one or more instructions are executed to switch one or more receive chains of the STA MLD operating on the second link to the first link, wherein the switched one or more receive chains are used for reception of a plurality of spatial streams.

17. The STA MLD according to claim 12, wherein the one or more instructions are further executed to, after the first communication is performed, switch one receive chain among one or more receive chains used for the first communication on the first link to the second link, wherein the switched one receive chain is used to perform the listening operation on the second link.

18. The STA MLD according to claim 12, wherein the delay timer starts when the second STA fails to perform a channel sensing or reception operation on the second link for a predetermined period.

19. The STA MLD according to claim 12, wherein the delay timer is set in an association procedure or multi-link (ML) capability negotiation procedure between the STA MLD and the AP MLD.

20. The STA MLD according to claim 12, wherein in the performing of the first communication, the one or more instructions are executed to:
cause the first STA to receive a MU-RTS trigger frame from the first AP;
cause the first STA to transmit a clear-to-send (CTS) frame to the first AP in response to the MU-RTS trigger frame;
cause the first STA to receive a data frame from the first AP; and
cause the first STA to transmit a reception response frame for the data frame to the first AP,
wherein the data frame is received using a plurality of spatial streams, and the reception response frame is transmitted using one spatial stream or the plurality of spatial streams.
